# EUROPÄISCHE PATENTSCHRIFT

(11) **EP 4 348 331 B1**
(45) Veröffentlichungstag und Bekanntmachung des Hinweises auf die Patenterteilung: **22.04.2026**
(21) Anmeldenummer: 22710390.0
(22) Anmeldetag: 04.03.2022
(51) Int. Cl.: G02B 27/00, G02B 27/01

(54) **REDUKTION DER LICHTLEISTUNGSANFORDERUNGEN IN EINEM WAVEGUIDE-HUD FÜR EIN FAHRZEUG ÜBER SCHALTBARE GITTER**
REDUCTION OF THE LIGHT POWER REQUIREMENTS IN A WAVEGUIDE HUD FOR A VEHICLE BY MEANS OF SWITCHABLE GRATINGS
RÉDUCTION DES BESOINS EN PUISSANCE LUMINEUSE DANS UN GUIDE D'ONDES POUR UN VÉHICULE AU MOYEN DE RÉSEAUX COMMUTABLES

(30) Priorität: 01.06.2021 DE 102021114196
(43) Veröffentlichungstag der Anmeldung: 10.04.2024
(73) Patentinhaber: Bayerische Motoren Werke Aktiengesellschaft, 80809 München (DE)
(72) Erfinder: JANZER, Michael Arthur, 85716 Unterschleißheim (DE); ZAEHNLE, Thomas, 89346 Bibertal (DE)
(86) Internationale Anmeldenummer: PCT/EP2022/055571
(87) Internationale Veröffentlichungsnummer: WO 2022/253472

(56) Entgegenhaltungen:
- WO-A1-2019/238846
- US-A1- 2017 131 546
- US-B2- 9 400 395

## Beschreibung

### Technisches Gebiet

Die Erfindung betrifft eine Waveguide-basierte Projektionsanzeigevorrichtung, die insbesondere in einem Kraftfahrzeug oder einem andersartigen Fahrzeug zum Einsatz kommen kann. Die Vorrichtung ist zur Erzeugung eines ins Blickfeld eines Benutzers eingeblendeten virtuellen Anzeigebilds über Reflexion an einer zumindest teilweise transparenten Reflexionsscheibe, insbesondere einer Frontscheibe des Fahrzeugs, ausgebildet und basiert dabei auf einem Waveguide, um bei einem kleinen Bauraum ein verhältnismäßig großes virtuelles Anzeigebild zu erzeugen. Die Erfindung richtet sich auch auf ein Verfahren zum Betrieb der Projektionsanzeigevorrichtung sowie auf ein damit ausgestattetes Fahrzeug.

### Technischer Hintergrund

Projektionsanzeigevorrichtungen sind insbesondere unter der Bezeichnung Head-Up-Display (HUD) bekannt. Beispielsweise in einem Kraftfahrzeug kann damit ein gewünschter Anzeigeinhalt, etwa eine Angabe über eine Geschwindigkeitsbegrenzung oder andere nützliche Navigations- und Fahrzeugbedienungshinweise oder auch Entertainment-Inhalte, in Form eines virtuellen Anzeigebilds dem vom Fahrer oder einem anderen Insassen beobachteten realen Umgebungsbild vor dem Fahrzeug überlagert werden.

Hierzu umfasst eine Projektionsanzeigevorrichtung in klassischer Bauweise ein unterhalb einer Oberseite der Instrumententafel untergebrachtes Display mit einer geeigneten Abbildungs- und Projektionsoptik, um ein Lichtstrahlenbündel mit einem Anzeigeinhalt zu erzeugen und auf eine für das rückseitig einfallende Licht transparente Reflexionsscheibe - wie die Frontscheibe des Kraftfahrzeugs oder eine extra davor vorgesehene Combinerscheibe - zu werfen, von der es zum Benutzer hin reflektiert wird, um das virtuelle Anzeigebild in seinem Blickfeld vor oder hinter der Reflexionsscheibe entstehen zu lassen.

Alternativ zu der klassischen HUD-Bauweise, deren Abbildungs- und Projektionsoptik im Strahlengang nach dem Display einen Konkavspiegel umfasst, dessen Größe linear mit dem HUD-Bild skaliert, ist insbesondere für AR-Anwendungen (Augmented Reality, erweiterte Realität) eine HUD-Bauweise mit einem großflächigen planaren Waveguide bekannt. Durch den Einsatz eines planaren Waveguides kann der für den HUD benötigte Bauraum in Relation zu der Größe des virtuellen Anzeigebilds im Vergleich zu der klassischen HUD-Bauweise erheblich reduziert werden.

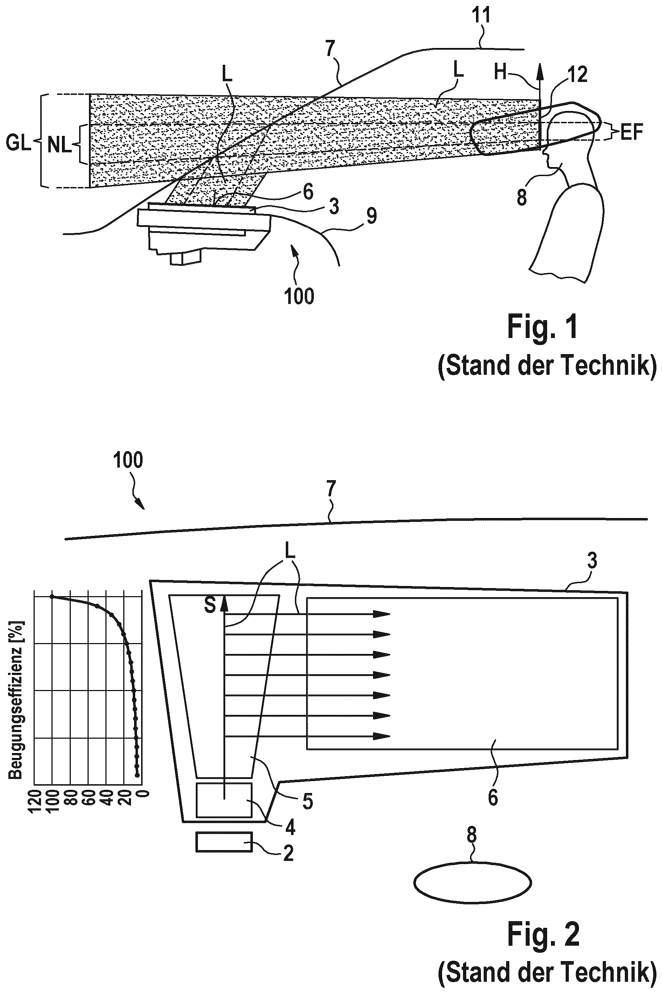

Damit HUDs bei allen Lichtverhältnissen gut ablesbar sind, müssen tagsüber Leuchtdichten von mehr als 10000 Cd/m² im virtuellen Anzeigebild erreicht werden. Dies hat zur Folge, dass man in der bildgebenden Einheit (PGU, picture generating unit) die entsprechende Lichtleistung zur Verfügung stellen muss. Bei HUDs, welche auf einem Waveguide-System mit holographischen Strukturen basieren, sind nur Laser als Lichtquelle geeignet. Laser-Lichtquellen sind im Vergleich zu Lichtquellen, die auf LEDs basieren, sehr teuer. Nun hat ein klassischer Waveguide die Eigenschaft, dass er stets die gesamte Eyebox ausleuchtet, die dem Querschnitt eines über das gesamte Auskoppelgitter des Waveguides ausgekoppelten Lichtstrahlenbündels entspricht. Dies bedeutet, dass Licht auch in Bereiche der Eyebox gesandt wird, in denen sich die Augen des Betrachters gerade nicht befinden (vgl. Fig. 1). Ein solches System ist somit maximal ineffizient.

Anhand von Fig. 2 wird kurz das Funktionsprinzip eines herkömmlichen Waveguide-HUDs 100 mit einer zweidimensionalen Pupillen-Expansion zur Ausleuchtung einer Eyebox (vgl. Fig. 1), die für die Augen eines Fahrers im Fahrzeug bestimmt ist, beschrieben. Fig. 2 zeigt dabei in einer stark vereinfachten schematischen Darstellung eine Draufsicht auf das Waveguide-HUD 100 mit einem ebenfalls nur schematisch dargestellten Teil des Strahlengangs im Waveguide. Ein von einer bildgebenden Einheit 2 erzeugtes Lichtstrahlenbündel L tritt in den als Glasplatte ausgebildeten Waveguide 3 über dessen Einkoppelgitter 4 ein, von dem es so umgelenkt wird, dass es mittels totaler interner Reflexion im Glas propagiert und in den Bereich eines Faltgitters 5 eintritt. Im Faltgitter 5 wird das Lichtstrahlenbündel L sukzessive in Richtung eines Auskoppelgitters 6 umgelenkt, und im Auskoppelgitter 6 wird es so umgelenkt, dass es die Glasplatte in Richtung einer Frontscheibe 7 des Fahrzeugs verlässt, von welcher es zum Benutzer 8, hier dem Fahrer, reflektiert wird. Um eine homogene Ausleuchtung sowohl der gesamten Eyebox als auch des dargestellten virtuellen Anzeigebilds zu erreichen, ist der Beugungseffizienz des Faltgitters 5 ein ortsabhängiger Gradient aufgeprägt, wie in Fig. 2 links in einem Graphen parallel zur Strahlausbreitungsrichtung S des Faltgitters 5 schematisch dargestellt. Dieser Gradient ist im Stand der Technik nicht zeitlich variabel: Er wird bei der Herstellung des Faltgitters 5 fixiert.

In diesem Zusammenhang offenbart beispielsweise WO 2019/238846 A1 ein Head-Up-Display für ein Fahrzeug, das eine bildgebende Einheit zum Erzeugen eines Bildes sowie einen zweidimensional vervielfachenden Lichtwellenleiter zum Aufweiten einer Austrittspupille aufweist. Mittels einer Messeinrichtung kann dabei die Position eines Auges eines Betrachters bestimmt werden. Das Head-Up-Display weist zudem Mittel zum Anpassen der Position einer Eyebox des Head-Up-Displays auf. Diese werden von einer Steuereinheit in Abhängigkeit von der Position des Auges des Betrachters angesteuert und weisen entweder zumindest einen Antrieb zum Bewegen zumindest einer Komponente des Head-Up-Displays oder eine Anzeigesteuerung zum Anpassen einer Position eines von einem Anzeigeelement der bildgebenden Einheit dargestellten Bildinhalts auf.

Andererseits sind bei anderen Fragestellungen im Stand der Technik zwischen einem lichtbeugenden (lichtumlenkenden) und einem nicht lichtbeugenden Zustand schaltbare Gitter auf Basis von Flüssigkristallen, insbesondere schaltbare Bragg-Gitter, beispielsweise gemäß US 10,890,707 B2 bekannt. Wie ferner beispielsweise in WO 2018/146326 A2 beschrieben, werden bei nah am Auge eines Betrachters befindlichen Displays, den sogenannten Near-to-Eye-Displays (beispielsweise Head-Mounted-Displays, HMDs), welche Waveguides benutzen, manchmal schaltbare Gittersegmente eingesetzt, um für eine feste Pupillenposition einen bestimmten Winkelbereich auszuleuchten.

So wird beispielsweise in US 9,400,395 B2 eine Bildgleichmäßigkeit innerhalb der Eyebox-Pupille erzielt, indem Beugungseffizienz mit der Einkopplung unterschiedlicher Bestandteile (d. h. der Winkelanteile eines Bilds) der darzustellenden Anzeigeinhalte synchronisiert wird. Hierzu offenbart US 9,400,395 B2 ein Near-Eye-Display, umfassend: einen Wellenleiter, der über den Winkel zusammenhängende Strahlen über einen begrenzten ersten Bereich von Winkeln durch interne Reflexion überträgt; einen Bildgenerator, der über den Winkel zusammenhängende Strahlen über einen zweiten, weiteren Winkelbereich generiert, um ein virtuelles Bild zu erzeugen; eine Eingangsöffnung des Wellenleiters, die eine Vielzahl steuerbarer Komponenten aufweist, von denen jede als diffraktive Optik betreibbar ist, um eine Teilmenge der über den Winkel zusammenhängenden Strahlen über einen begrenzten Abschnitt des zweiten Winkelbereichs einzukoppeln, um die Teilmenge der über den Winkel zusammenhängenden Strahlen entlang des Wellenleiters innerhalb des ersten Winkelbereichs zu übertragen; eine Ausgangsöffnung des Wellenleiters, die eine Vielzahl von steuerbaren Komponenten aufweist, von denen jede selektiv als diffraktive Optik betreibbar ist, um eine entsprechende Teilmenge der über den Winkel zusammenhängenden Strahlen aus dem Wellenleiter in Richtung einer Eyebox auszukoppeln; und eine Steuerung, die den Betrieb der steuerbaren Komponenten der Ausgangsöffnung mit der Übertragung verschiedener Teilmengen von über den Winkel zusammenhängenden Strahlen entlang des Wellenleiters synchronisiert, um die Teilmengen von über den Winkel zusammenhängenden Strahlen aus dem Wellenleiter auszukoppeln, um das virtuelle Bild innerhalb der Eyebox über den zweiten weiteren Winkelbereich darzustellen. Ferner kann dabei eine diffraktive Zwischenoptik mit steuerbaren Abschnitten zwischen der Eingangsöffnung der Ausgangsöffnung verwendet werden, um die über den Winkel zusammenhängenden Strahlen räumlich über unterschiedliche Bereiche der steuerbaren Ausgangsöffnung zu verteilen, und Abschnitte der steuerbaren Ausgangsöffnung können selektiv angesteuert werden in Übereinstimmung sowohl mit steuerbaren diffraktiven Eingangskomponenten als auch mit steuerbarer diffraktiver Zwischenoptik, um eine Überlappung der unterschiedlichen winkelverwandten Strahlen innerhalb der Eyebox zu gewährleisten.

In diesem Zusammenhang offenbart ferner US 2017/0131546 A1 eine Einrichtung zur Verwendung bei der Replikation eines Bildes, das einer Eingabepupille zugeordnet ist, an eine Ausgabepupille. Die Einrichtung umfasst einen planaren optischen Wellenleiter, der ein Bulksubstrat sowie einen Eingabekoppler, eine Zwischenkomponente und einen Ausgabekoppler beinhaltet. Der Eingabekoppler ist dazu ausgebildet, Licht, das dem Bild entspricht, das der Eingabepupille zugeordnet ist, in das Bulksubstrat des Wellenleiters und in Richtung der Zwischenkomponente zu koppeln. Die Zwischenkomponente ist dazu ausgebildet, eines von einer horizontalen oder vertikalen Pupillenerweiterung durchzuführen und das Licht, das dem Bild entspricht, in Richtung des Ausgabekopplers zu leiten. Der Ausgabekoppler ist dazu ausgebildet, die andere von einer horizontalen oder vertikalen Pupillenerweiterung durchzuführen und das Licht, das dem Bild entspricht und sich in dem planaren optischen Wellenleiter von dem Eingabekoppler zu dem Ausgabekoppler bewegt, aus dem Wellenleiter zu koppeln, so dass das Licht von der Ausgabepupille ausgegeben und abgebildet wird. Dabei umfasst eines oder mehrere von dem Eingabekoppler, der Zwischenkomponente oder dem Ausgabekoppler ein Oberflächenreliefgitter, das in einer Flüssigkristallpolymer-Beschichtung ausgebildet ist. Spezifisch kann der Wellenleiter dabei auch schaltbare Bragg-Volumengitter umfassen, die gepixelt und teilweise eingeschaltet werden können, um die Beugungseffizienz über die Gitteroberfläche zu optimieren. Dies kann in Verbindung mit einem Eye-Tracker verwendet werden, um das Beugungseffizienzprofil für eine spezifische Augenposition zu optimieren. Zusätzlich, falls das schaltbare Bragg-Gitter schnell genug ist, kann es zeitlich schwanken, um die Helligkeitsgleichmäßigkeit über eine Pixelschaltzeit zu verbessern.

Es ist Aufgabe der vorliegenden Erfindung, eine Waveguide-basierte Projektionsanzeigevorrichtung anzugeben, mit der es möglich ist, die Nutzungseffizienz des Lichts, und damit auch der elektrischen Energieleistung, zu steigern. Insbesondere kann dadurch die Eignung der Projektionsanzeigevorrichtung für den Einsatz in einem Kraftfahrzeug oder einem anderen Land-, Luft- oder Wasserfahrzeug zu den eingangs genannten Zwecken verbessert sein.

### Offenbarung der Erfindung

Diese Aufgabe wird durch eine Waveguide-basierte Projektionsanzeigevorrichtung gemäß Anspruch 1, ein zugehöriges Betriebsverfahren, eine entsprechende Steuerungseinheit und ein damit ausgestattetes Fahrzeug gemäß den nebengeordneten Ansprüchen gelöst. Weitere Ausgestaltungen sind in den abhängigen Ansprüchen angegeben. Alle in den Ansprüchen und der nachfolgen Beschreibung für die Projektionsanzeigevorrichtung genannten weiterführenden Merkmale und Wirkungen gelten auch in Bezug auf deren Betriebsverfahren, die Steuerungseinheit sowie auf das Fahrzeug, wie auch umgekehrt.

Gemäß einem ersten Aspekt ist eine Waveguide-basierte Projektionsanzeigevorrichtung (nachfolgend auch kurz "Vorrichtung" genannt) vorgesehen, die insbesondere zum Einsatz in einem Kraftfahrzeug oder einem beliebigen anderen Land-, Luft- oder Wasserfahrzeug ausgebildet sein kann. Es kann sich bei der Projektionsanzeigevorrichtung insbesondere um ein Head-Up-Display (HUD) handeln.

Die Projektionsanzeigevorrichtung umfasst eine bildgebende Einheit (auch PGU, Picture Generating Unit, genannt), die zur Erzeugung eines Lichtstrahlenbündels mit einem darzustellenden Anzeigeinhalt ausgebildet ist. Ferner umfasst die Vorrichtung einen flächig, insbesondere planar oder eben, ausgebildeten Waveguide, der zum Leiten optischer Wellen mittels interner Totalreflexion ausgebildet ist. Dieser ist im vorliegenden Fall zu einer zweidimensionalen Pupillen-Expansion ausgebildet. Hierzu besitzt der Waveguide ein in einer seiner zwei Flächenseiten großflächig ausgebildetes Auskoppelement, ein seitlich davon angeordnetes Einkoppelelement, das zum Einkoppeln des von der bildgebenden Einheit erzeugten Lichtstrahlenbündels in den Waveguide ausgebildet ist, sowie ein im Strahlengang des Lichts im Waveguide dazwischen angeordnetes Faltelement, das zu einem sukzessiven Umlenken des eingekoppelten Lichts zum Auskoppelelement ausgebildet ist. In aller Regel handelt es sich bei dem Einkoppelelement, dem Faltelement und dem Auskoppelelement um optische Gitter, sodass nachfolgend nur noch von "Einkoppelgitter", "Auskoppelgitter" und "Faltgitter" die Rede sein wird. (Dies ist jedoch nicht beschränkend, d. h. auch ein anderes optisches Element als Gitter kann grundsätzlich für die beschriebene Funktion eines dieser Waveguide-Elemente geeignet sein.)

Des Weiteren umfasst die Vorrichtung eine Reflexionsscheibe, die zum Reflektieren eines aus dem Waveguide ausgekoppelten Lichtstrahlenbündels zu einer für Augen eines Benutzers vorbestimmten Eyebox so angeordnet und ausgebildet ist, dass im Blickfeld des Benutzers hinter der Reflexionsscheibe ein virtuelles Anzeigebild entsteht. Die Reflexionsscheibe kann beim Einsatz im Fahrzeug beispielsweise durch eine Frontscheibe oder eine fahrzeuginnenseitig davor angeordnete Combinerscheibe gebildet sein. Sie ist insbesondere für das rückseitig einfallende Umgebungslicht zumindest teilweise transparent, um das virtuelle Anzeigebild einer vom Benutzer durch die Frontscheibe etc. beobachteten realen Umgebung zu überlagern.

Die Eyebox wird hierin als ein zweidimensionaler Raumbereich quer zur Strahlausbreitungsrichtung verstanden. Dieser kann sich insbesondere senkrecht zur Strahlausbreitungsrichtung und/oder vertikal im Fahrzeug erstrecken. Die Eyebox-Position in Strahlausbreitungsrichtung kann beispielsweise durch den Abstand von der Reflexionsscheibe definiert sein, wobei der Benutzer das virtuelle Anzeigebild auch bei Kopfbewegungen um beispielsweise etwa 15 cm auf die Reflexionsscheibe zu oder von dieser weg in unverändert guter Qualität sehen kann.

Ferner umfasst die Projektionsanzeigevorrichtung eine Eye-Tracking-Einrichtung, die zur Ermittlung eines von den Augen des Benutzers aktuell besetzten Eyebox-Fensters einer vorbestimmten Größe innerhalb der Eyebox, d. h. mit einer vorbestimmten Teilfläche innerhalb der gesamten Eyeboxfläche, ausgebildet ist. Während die Gesamtfläche der Eyebox beispielsweise dem Querschnitt eines über das gesamte Falt- und Auskoppelgitter ausgekoppelten und über die Reflexionsscheibe zum Benutzer reflektierten Lichtstrahlenbündels entspricht, stellt das jeweils aktuelle Eyebox-Fenster nur einen Teilbereich dieser Eyebox dar, der nur einen Bruchteil (wie z. B. etwa eine Hälfte, ein Drittel, ein Viertel oder weniger) der Gesamthöhe (und damit auch der Gesamtfläche) der Eyebox abdeckt und dessen Position unter anderem von der Körpergröße und/oder der jeweiligen Pose des Benutzers abhängen kann. Je nach Genauigkeit des Eye-Tracking kann die vorbestimmte Größe des Eyebox-Fensters variieren und beispielsweise durch eine Fensterhöhe im Bereich von etwa 20 mm festgelegt sein. Die Eye-Tracking-Einrichtung kann beispielsweise mindestens eine Kamera umfassen, die zur optischen Erfassung der Eyebox und der Augen des Benutzers ausgebildet ist.

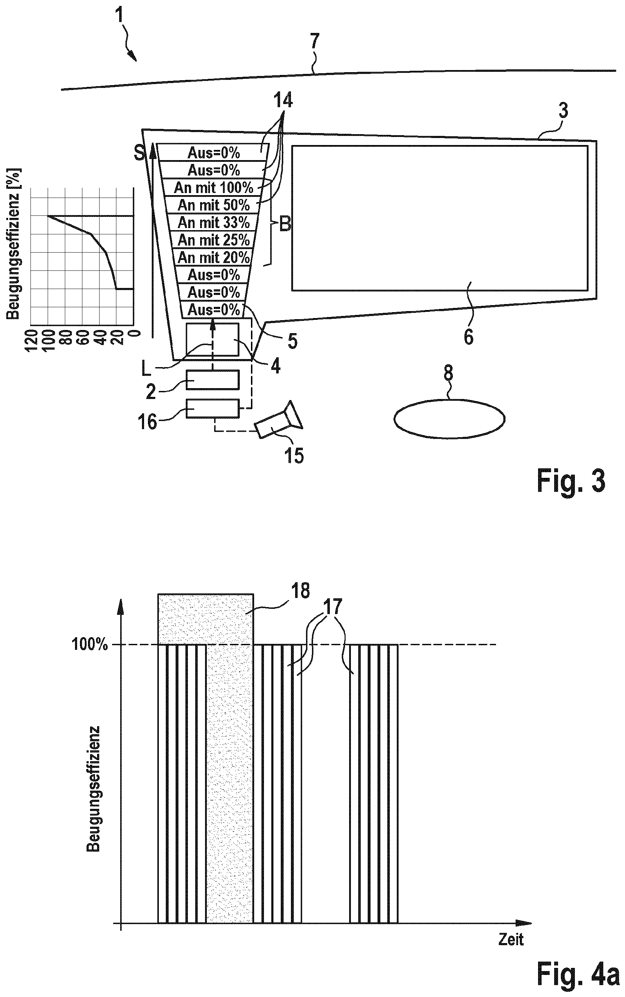

Zur Lösung der eingangs erwähnten Effizienzproblematik ist das Faltgitter in Strahlausbreitungsrichtung, die nach Passieren des Auskoppelgitters und der Reflexion an der Reflexionsscheibe einer Höhenrichtung der Eyebox entspricht (vgl. Fig. 3), in mehrere unabhängig voneinander in einen lichtumlenkenden (lichtbeugenden) Zustand schaltbare Segmente unterteilt. Dabei ist die Projektionsanzeigevorrichtung dazu eingerichtet, abhängig von dem aktuell ermittelten Eyebox-Fenster jeweils nur eine Teilmenge dieser Segmente einzuschalten, und zwar mit einer derart voneinander verschiedenen Beugungseffizienz zur Erzeugung eines (zeitlich variablen) räumlichen Gradienten in dieser Richtung, dass das ausgekoppelte Lichtstrahlenbündel in Eyebox-Höhenrichtung auf das ermittelte Eyebox-Fenster beschränkt ist und dieses möglichst gleichmäßig ausleuchtet.

Hierzu kann die Projektionsanzeigevorrichtung beispielsweise eine geeignete Steuerungseinheit umfassen, die dazu ausgebildet und eingerichtet ist, ein Eye-Tracking-Signal der Eye-Tracking-Einrichtung zu erhalten und dieses auszuwerten, indem sie das von den Augen des Benutzers aktuell besetzte Eyebox-Fenster und die zu dessen Ausleuchtung benötigten Segmente des Faltgitters sowie die zugehörigen Beugungseffizienzen ermittelt. Die Steuerungseinheit ist ferner dazu ausgebildet und eingerichtet, die Segmente entsprechend anzusteuern.

Dabei können beispielsweise jeweils aufeinander folgende Segmente in den lichtumlenkenden Zustand geschaltet werden, die je nach der Größe des ermittelbaren Eyebox-Fensters beispielsweise einen Bruchteil - etwa eine Hälfte oder ein oder zwei Drittel oder ein Viertel - der gesamten Faltgittererstreckung in der genannten Richtung ausmachen können. Die jeweiligen restlichen Segmente im Faltgitter bleiben ausgeschaltet und lenken somit kein Licht um. Durch eine geeignete Ansteuerung der eingeschalteten Segmente kann dabei die Beugungseffizienz beispielsweise innerhalb des jeweiligen Segments räumlich konstant (d. h. einheitlich) und von Segment zu Segment unterschiedlich eingestellt werden. Auf diese Weise lässt sich ein an das jeweils ermittelte Eyebox-Fenster anpassbarer - d. h. im Gegensatz zum Stand der Technik zeitlich variabler - Gradient der Beugungseffizienz in der genannten Strahlausbreitungsrichtung des Faltgitters erzeugen.

Eine Idee der Erfindung besteht also darin, durch eine Unterteilung des Faltgitters in unabhängig voneinander schaltbare Gittersegmente nur denjenigen vertikalen Bereich der Eyebox auszuleuchten, in dem sich die Augen des Betrachters gerade befinden. Durch eine geeignete Ansteuerung der eingeschalteten Segmente ist dabei die jeweilige Beugungseffizienz von Segment zu Segment unterschiedlich einstellbar, was zur Erzeugung eines zur Anpassung an das aktuelle Eyebox-Fenster zeitlich variablen räumlichen Gradienten der Beugungseffizienz im Faltgitter genutzt wird, um eine möglichst gleichmäßige Ausleuchtung des Eyebox-Fensters zu erreichen.

Dadurch lässt sich der Lichtbedarf der Projektionsanzeigevorrichtung, und damit die Leistungsanforderungen an deren Lichtquellen, um mindestens 50% gegenüber dem herkömmlichen Waveguide-HUD, das eine zeitlich nicht variable Beugungseffizienz im Faltgitter hat, reduzieren. Auf diese Weise können nicht nur erhebliche Kosteneinsparungen im Waveguide-HUD, sondern auch beträchtliche Leistungseinsparungen im elektrischen Energieverbrauch der Vorrichtung erzielt werden. In Anbetracht der zunehmenden Elektrifizierung der Fahrzeuge kann der letztere Punkt sogar noch wichtiger als die reine Kosteneinsparung sein.

Insbesondere kann dabei der Waveguide - beispielsweise dessen Einkoppelgitter und/oder Faltgitter und/oder Auskoppelgitter - holografische Strukturen aufweisen. In diesem Fall sind nur Laser als Lichtquelle der bildgebenden Einheit geeignet. Durch die hierin beschriebene Effizienzerhöhung der Vorrichtung können die Lichtleistungsanforderungen an die Laserquelle im Vergleich zum Stand der Technik erheblich gesenkt werden.

Die schaltbaren Segmente des Faltgitters können beispielsweise als zwischen einem lichtablenkenden und einem nicht lichtablenkenden Zustand schaltbare Gitter auf Basis von Flüssigkristallen, insbesondere als schaltbare Bragg-Gitter, ausgebildet sein. Alternative Ausgestaltungen sind ebenfalls einsetzbar, beispielsweise passive polarisationssensitive Gittersegmente in Kombination mit schaltbaren Polarisationsfiltern.

Wie oben erwähnt, kann die Beugungseffizienz jedes einzelnen Segments des Faltgitters insbesondere für das gesamte Segment einheitlich einstellbar und unabhängig von den anderen Segmenten zeitlich variierbar sein. Dadurch ist in einem gesamten Faltgitterabschnitt, den die eingeschalteten Segmente bilden, ein geeigneter räumlicher Gradient für eine gleichmäßige Ausleuchtung des aktuellen Eyebox-Fensters einstellbar.

Insbesondere kann jedes schaltbare Segment des Faltgitters in der genannten Strahlausbreitungsrichtung eine Breite von einigen wenigen Millimetern bis etwa 20 mm besitzen. Je feiner diese Unterteilung des Faltgitters in Segmente ist, desto feiner ist auch der räumliche Gradient der Beugungseffizienz durch das Schalten einzelner Segmente einstellbar.

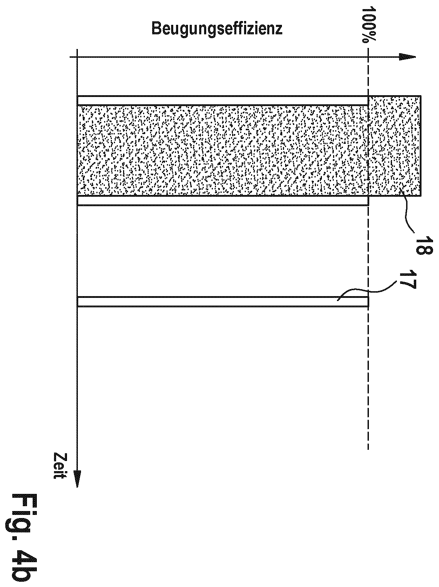

Gemäß einer Ausführungsform ist die Projektionsanzeigevorrichtung dazu ausgebildet und eingerichtet, die jeweilige Beugungseffizienz jedes einzelnen eingeschalteten Segments des Faltgitters durch Pulsweitenmodulation zu erzeugen. Dies bedeutet, dass ein einzelnes Segment während der Anzeigedauer eines Einzelbildes nicht durchgehend eingeschaltet ist (außer man wünscht 100% Beugungseffizienz in diesem Segment). Jedes einzelne Segment wird nur solange eingeschaltet, dass es über die Anzeigedauer des Einzelbildes nur so viel Licht umlenkt, wie benötigt wird, um für die aktuelle Position der Augen des Benutzers (Eyebox-Fenster) im Zusammenspiel mit den anderen eingeschalteten Segmenten ein homogenes Anzeigebild zu erzeugen. Hierbei muss beachtet werden, dass die Pulsweiten deutlich kürzer sein sollten als das zeitliche Auflösungsvermögen des menschlichen Auges, d. h. in der Regel eine maximale Pulsweite von deutlich kürzer als 25 ms haben sollten, um keine Flimmereffekte beim Betrachter zu erzeugen. Eine mögliche Pulsfolge ist in Fig. 4 beispielhaft für zwei verschiedene Beugungseffizienzen dargestellt.

Alternativ zu dieser Ausführungsform können die Segmente nicht nur zwischen den genannten zwei Grenzzuständen "lichtablenkend" und "nicht lichtablenkend", sondern auch kontinuierlich oder diskret in Zwischenzustände zur Einstellung der jeweiligen Beugungseffizienz schaltbar sein. Dies kann beispielsweise bei auf Flüssigkristallen basierenden schaltbaren Gittern durch eine entsprechende Variation der angelegten elektrischen Spannung implementiert sein.

Gemäß einem weiteren Aspekt ist ein Verfahren zum Betreiben einer Projektionsanzeigevorrichtung der hierin dargelegten Art vorgesehen. Das Verfahren umfasst dabei folgende Schritte:
- Erzeugen eines Lichtstrahlenbündels durch die bildgebende Einheit und Einkoppeln dieses Lichtstrahlenbündels in den Waveguide;
- Erhalten eines Eye-Tracking-Signals von der Eye-Tracking-Einrichtung und Ermitteln daraus eines von den Augen des Benutzers aktuell besetzten Eyebox-Fensters innerhalb der Eyebox;
- Ermitteln derjenigen Segmente des Faltgitters, die zum Ausleuchten des ermittelten Eyebox-Fensters beitragen;
- Ermitteln für diese Segmente einer derart voneinander verschiedenen Beugungseffizienz zur Erzeugung eines räumlichen Gradienten in Strahlausbreitungsrichtung des Faltgitters, die der Eyebox-Höhenrichtung entspricht, dass das aus dem Waveguide ausgekoppelte Lichtstrahlenbündel in Eyebox-Höhenrichtung auf das ermittelte Eyebox-Fenster beschränkt ist und dieses möglichst gleichmäßig ausleuchtet; und
- Einschalten der so ermittelten Segmente des Faltgitters mit der für das jeweilige Segment ermittelten Beugungseffizienz.

Insbesondere kann beim letztgenannten Schritt die jeweils ermittelte Beugungseffizienz jedes einzelnen Segments des Faltgitters durch Pulsweitenmodulation erzeugt werden.

Gemäß einem weiteren Aspekt ist eine weiter oben bereits erwähnte Steuerungseinheit zum Betreiben einer Projektionsanzeigevorrichtung der hierin dargelegten Art vorgesehen, die zum automatischen Ausführen eines solchen Verfahrens ausgebildet und eingerichtet ist.

Gemäß einem weiteren Aspekt ist ein Fahrzeug, insbesondere ein Kraftfahrzeug oder ein beliebiges anderes Land-, Luft- oder Wasserfahrzeug, vorgesehen. Das Fahrzeug umfasst eine Frontscheibe und eine darunter angeordnete Instrumententafel. Ferner umfasst das Fahrzeug eine Projektionsanzeigevorrichtung der hierin dargelegten Art, deren Reflexionsscheibe durch die Frontscheibe oder eine fahrzeuginnenseitig davor angeordnete Combinerscheibe gebildet ist und deren Waveguide sich mit seiner Flächenseite, in der das Auskoppelgitter ausgebildet ist, in oder entlang einer Oberseite der Instrumententafel (insbesondere bündig mit ihr abschließend) erstreckt. Ferner umfasst das Fahrzeug eine Steuerungseinheit der hierin dargelegten Art.

### Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind aus Gründen anschaulicher Darstellung zumindest teilweise rein schematisch gehalten und sind daher nicht als maßstabsgetreu zu verstehen. Es zeigen:
- Figur 1: eine seitliche Querschnittsansicht eines Fahrzeugs mit einem Waveguide-basierten HUD nach Stand der Technik, bei dem ein von Benutzeraugen aktuell besetztes Eyebox-Fenster nur einem Bruchteil des Gesamtquerschnitts eines aus dem Waveguide ausgekoppelten Lichtstrahlenbündels entspricht;
- Figur 2: Draufsicht auf das Waveguide-HUD der Fig. 1, wobei der Strahlengang im Waveguide stark vereinfach dargestellt ist und ein Graph links in Fig. 2 schematisch einen fixen ortsabhängigen Verlauf der Beugungseffizienz in einem Faltgitter des Waveguides zeigt;
- Figur 3: Draufsicht auf ein Ausführungsbeispiel einer Waveguide-basierten Projektionsanzeigevorrichtung der hierin dargelegten Art mit einer Segmentierung des Faltgitters, wobei ein Graph links in Fig. 3 schematisch einen zeitlich variablen ortsabhängigen Verlauf der Beugungseffizienz im Faltgitter zeigt; und
- Figur 4a-4b: eine schematische Darstellung einer Pulsweitenmodulation zur zeitlich variablen Erzeugung einer gewünschten Beugungseffizienz in einem Segment des Faltgitters der Fig. 3, wobei eine Pulsfolge beispielhaft für zwei Beugungseffizienzen von 50% (Fig. 4a) und 10% (Fig. 4b) dargestellt ist.

### Beschreibung von Ausführungsformen

Fig. 1 zeigt in einer stark vereinfachten schematischen seitlichen Querschnittsansicht ein Beispiel eines Kraftfahrzeugs 11 mit einer Waveguide-basierten Projektionsanzeigevorrichtung nach Stand der Technik. Bei dieser Projektionsanzeigevorrichtung handelt es sich um ein eingangs erwähntes herkömmliches Waveguide-HUD 100. Das Kraftfahrzeug 11 umfasst eine Frontscheibe 7 und eine darunter angeordnete Instrumententafel 9, in deren Oberseite das Waveguide-HUD 100 angeordnet ist.

Fig. 2 zeigt in einer stark vereinfachten schematischen Darstellung eine Draufsicht auf das Waveguide-HUD 100 der Fig. 1 mit einem stark vereinfacht dargestellten Teil des Strahlengangs in seinem Waveguide 3. Anhand der Fig. 2 wird kurz das Funktionsprinzip eines herkömmlichen Waveguide-HUDs 100 mit einer zweidimensionalen Pupillen-Expansion beschrieben:
Ein von einer bildgebenden Einheit 2 des Waveguide-HUDs 100 erzeugtes Lichtstrahlenbündel L tritt in den beispielsweise als eine Glasplatte ausgebildeten Waveguide 3 über dessen Einkoppelgitter 4 ein. Von dem Einkoppelgitter 4 wird das Lichtstrahlenbündel L so umgelenkt, dass es mittels totaler interner Reflexion im Glas propagiert und in den Bereich eines Faltgitters 5 eintritt. Im Faltgitter 5 wird das Lichtstrahlenbündel sukzessive in Richtung eines Auskoppelgitters 6 umgelenkt, und im Auskoppelgitter 6 wird es so umgelenkt, dass es die Glasplatte in Richtung der Frontscheibe 7 des Kraftfahrzeugs 11 verlässt, von welcher es zum Benutzer 8, hier einem Fahrer des Kraftfahrzeugs 11, reflektiert wird.

Für eine homogene Ausleuchtung sowohl einer gesamten Eyebox 12 als auch eines dargestellten virtuellen Anzeigebilds ist der Beugungseffizienz des herkömmlichen Faltgitters 5 in Fig. 2 ein ortsabhängiger Gradient aufgeprägt. Dieser ist in Fig. 2 links in einem Graphen parallel zur Strahlausbreitungsrichtung S des Faltgitters 5 schematisch dargestellt. Dieser Gradient ist gemäß Stand der Technik nicht zeitlich variabel und wird bei der Herstellung des Faltgitters 5, beispielsweise seiner holographischen Strukturen, fixiert.

Die Frontscheibe 7 dient beim Waveguide-HUD 100 als eine Reflexionsscheibe, die ein aus dem Waveguide 3 ausgekoppeltes Lichtstrahlenbündel L zu der Eyebox 12 reflektiert, sodass im Blickfeld des Benutzers 8 hinter der Frontscheibe 7 ein virtuelles Anzeigebild (nicht dargestellt) entsteht.

Die Eyebox 12 ist hier als ein zweidimensionaler Raumbereich in etwa senkrecht zur Strahlausbreitungsrichtung definiert, aus dem das virtuelle Anzeigebild für den Benutzer 8 zu sehen ist. Auch bei Kopfbewegungen des Benutzers 8 um beispielsweise etwa 10-15 cm in Fahrzeuglängsrichtung nach vorn oder nach hinten aus der eingezeichneten Eyebox-Position kann er das virtuelle Anzeigebild gut sehen. Ein entsprechender dreidimensionaler Raumbereich um die Eyebox 12 ist in Fig. 1 durch dessen Kontur angedeutet.

Die Eyebox 12 umfasst in deren Höhenrichtung H unterschiedliche Körpergrößen und Sitzpositionen für verschiedene Benutzer 8, wie in Fig. 1 deutlich zu erkennen ist. Dies bedeutet, dass Licht beim Betrieb des herkömmlichen Waveguide-HUDs 100 stets auch in Bereiche der Eyebox 12 gesandt wird, in denen sich die Augen des Benutzers 8 gerade nicht befinden. So trägt in Fig. 1 nur ein geringer Anteil eines Gesamtstrahlvolumens GL, das aus dem Waveguide 3 ausgekoppelt wird und die ganze Eyebox 12 ausleuchtet, als Nutzlicht NL zur Ausleuchtung eines der aktuellen Kopfposition des Benutzers 8 entsprechenden Eyebox-Fensters EF bei. Ein solches System ist somit maximal ineffizient.

Fig. 3 zeigt eine Draufsicht auf ein Ausführungsbeispiel einer Waveguide-basierten Projektionsanzeigevorrichtung 1 der hierin dargelegten Art. Zur Lösung der oben genannten Effizienzproblematik unterscheidet sich diese Vorrichtung von dem oben beschriebenen herkömmlichen Waveguide-HUD 100 zum einen dadurch, dass in deren Waveguide 3 das Faltgitter 5 in Strahlausbreitungsrichtung S, die nach Passieren des Auskoppelgitters 4 und der Reflexion an der Reflexionsscheibe 4 einer Eyebox-Höhenrichtung H entspricht, in mehrere unabhängig voneinander in einen lichtumlenkenden (lichtbeugenden) Zustand schaltbare Segmente 14 unterteilt ist. In Fig. 3 sind rein beispielhaft bzw. aus Darstellungsgründen nur zehn Segmente 14 dargestellt, wobei deren Anzahl auch deutlich mehr als zehn, aber auch weniger sein kann.

Ferner umfasst die Projektionsanzeigevorrichtung 1 eine Eye-Tracking-Einrichtung 15, die zur Ermittlung eines von den Augen des Benutzers 8 aktuell besetzten Eyebox-Fensters EF einer vorbestimmten Größe, d. h. mit einem vorbestimmten Flächen- oder Höhenanteil, innerhalb der gesamten Eyebox 12, ausgebildet ist. Dabei ist die Projektionsanzeigevorrichtung 1 dazu eingerichtet, abhängig von dem aktuell ermittelten Eyebox-Fenster EF jeweils nur eine Teilmenge der Segmente 14 einzuschalten, und zwar mit einer derart voneinander verschiedenen Beugungseffizienz zur Erzeugung eines zeitlich variablen räumlichen Gradienten in dieser Richtung, dass das Lichtstrahlenbündel L in Eyebox-Höhenrichtung H auf das ermittelte Eyebox-Fenster EF beschränkt ist und dieses dabei möglichst gleichmäßig ausleuchtet.

Hierzu umfasst die Projektionsanzeigevorrichtung 1 eine geeignete Steuerungseinheit 16, die dazu ausgebildet und eingerichtet ist, ein Eye-Tracking-Signal der Eye-Tracking-Einrichtung 15 zu erhalten und dieses auszuwerten, um die jeweils benötigten Segmente 14 zu ermitteln und entsprechend anzusteuern.

Die Breite der einzelnen Segmente 14 in Strahlausbreitungsrichtung S kann rein beispielhaft wenige Millimeter bis ca. 20 mm betragen. Hiermit lässt sich im Faltgitter 5 ein zeitlich variabler Gradient der Beugungseffizienz in demjenigen Bereich B erzeugen, der für die Ausleuchtung des aktuellen Eyebox-Fensters **EF** zuständig ist, in dem sich gerade die Augen des Benutzers 8 befinden. Die restlichen Segmente im Faltgitter 5 - d. h. beispielsweise holographische Strukturen bei einem holografischen Faltgitter 5 - werden ausgeschaltet und lenken somit kein Licht mehr um.

So sind in Fig. 3 nur fünf mittlere Segmente 14 des Faltgitters 5 eingeschaltet, während in diesem Moment die ersten drei sowie die letzten zwei Segmente 14 in Strahlausbreitungsrichtung S ausgeschaltet bleiben.

Durch eine geeignete Ansteuerung haben in dem dargestellten Zeitpunkt die aufeinander folgenden eingeschalteten Segmente eine von Segment zu Segment ansteigende Beugungseffizienz von 20%, 25%, 33%, 50% und 100%. Auf diese Weise lässt sich ein an das aktuell ermittelte Eyebox-Fenster EF angepasster - d. h. im Gegensatz zum Stand der Technik zeitlich variabler - räumlicher Gradient der Beugungseffizienz in der genannten Strahlausbreitungsrichtung S des Faltgitters 15 erzeugen, der in Fig. 3 links in einem Graphen schematisch dargestellt ist.

Man beachte, dass in Fig. 3 in diesem Beispiel nur die Hälfte der Segmente 14 eingeschaltet ist. Wandern die Augen des Benutzers 8 in der Eyebox 12 in vertikaler Richtung (Eyebox-Höhenrichtung H), so bewegt sich auch der Bereich B der eingeschalteten Segmente 14 entsprechend automatisch mit.

Dadurch lässt sich der Lichtbedarf der Projektionsanzeigevorrichtung 1, und damit die Leistungsanforderungen an deren Lichtquellen, um mindestens 50% gegenüber dem herkömmlichen Waveguide-HUD 100 gemäß den Fig. 1 und 2 reduzieren. Auf diese Weise können nicht nur erhebliche Kosteneinsparungen, sondern auch beträchtliche Leistungseinsparungen im elektrischen Energieverbrauch der Vorrichtung erzielt werden. In Anbetracht der zunehmenden Elektrifizierung der Fahrzeuge kann der letztere Punkt sogar noch wichtiger als die reine Kosteneinsparung sein.

Im Übrigen kann die Projektionsanzeigevorrichtung 1 insbesondere ähnlich dem herkömmlichen Waveguide-HUD 100 gemäß den Figuren 1 und 2 ausgebildet sein.

Die zeitlich variablen Gradienten werden z. B. mittels Pulsweitenmodulation erzeugt. Dies bedeutet, dass ein einzelnes Segment 14 während der Anzeigedauer eines Einzelbildes des virtuellen Anzeigebilds nicht durchgehend eingeschaltet ist (außer man wünscht 100% Beugungseffizienz in diesem Segment 14). Es wird nur solange eingeschaltet, dass über die Anzeigedauer des Einzelbildes nur so viel Licht umgelenkt wird, wie benötigt wird, um in der Eyebox 12 am momentanen Punkt der Augen ein homogenes Bild zu erzeugen. Hierbei muss beachtet werden, dass die Pulsweiten deutlich kürzer sein sollten als das zeitliche Auflösungsvermögen des menschlichen Auges (in der Regel gilt also für die Pulsweiten tp << 25ms), um keine Flimmereffekte beim Betrachter zu erzeugen.

So zeigen Fig. 4a und Fig. 4b jeweils beispielhaft eine mögliche Pulsfolge für zwei verschiedene Beugungseffizienzen. Es handelt sich um eine schematische Darstellung der Pulsweitenmodulation. Über die Anzahl der Einzelpulse 17, in denen das jeweilige Segment 14 während der Anzeigedauer 18 eines Einzelbildes eingeschaltet wird, lässt sich die Beugungseffizienz dieses Segments 14 steuern. So wird in Fig. 4a durch das Einschalten von fünf Einzelpulsen 17, die eine Hälfte der Anzeigedauer 18 eines Einzelbildes bilden, eine Beugungseffizienz von 50% im betreffenden Segment 14 eingestellt. In Fig. 4b wird nur einer von zehn möglichen Einzelpulsen 17 in der Anzeigedauer 18 erzeugt, um eine Beugungseffizienz von 10% im betreffenden Segment 14 einzustellen.

### Bezugszeichenliste

- 1: Waveguide-basierte Projektionsanzeigevorrichtung
- 100: herkömmliches Waveguide-HUD
- 2: bildgebende Einheit
- 3: Waveguide
- 4: Einkoppelgitter
- 5: Faltgitter
- 6: Auskoppelgitter
- 7: Frontscheibe
- 8: Benutzer
- 9: Instrumententafel
- 11: Kraftfahrzeug
- 12: Eyebox
- 14: Segment
- 15: Eye-Tracking-Einrichtung
- 16: Steuerungseinheit
- 17: Einzelpuls
- 18: Anzeigedauer
- L: Lichtstrahlenbündel
- EF: Eyebox-Fenster, das aktuell von den Augen des Benutzers besetzt ist
- NL: Nutzlicht, das zur Ausleuchtung des aktuellen Eyebox-Fensters beiträgt
- GL: Gesamtstrahlvolumen, das die ganze Eyebox ausleuchtet
- S: Strahlausbreitungsrichtung im Faltgitter
- H: Eyebox-Höhenrichtung
- B: Bereich des Faltgitters mit eingeschalteten Segmenten

## Patentansprüche

1. Waveguide-basierte Projektionsanzeigevorrichtung (1), insbesondere zum Einsatz in einem Fahrzeug, umfassend:
- eine bildgebende Einheit (2) und einen flächigen, insbesondere ebenen, Waveguide (3), der zu einer zweidimensionalen Pupillen-Expansion ausgebildet ist, indem er ein in einer seiner Flächenseiten großflächig ausgebildetes Auskoppelgitter (6), ein seitlich davon angeordnetes Einkoppelgitter (4) zum Einkoppeln eines von der bildgebenden Einheit erzeugten Lichtstrahlenbündels sowie ein dazwischen angeordnetes Faltgitter (5) zu einem sukzessiven Umlenken des eingekoppelten Lichts zum Auskoppelgitter (6) aufweist;
- eine zumindest teilweise transparente Reflexionsscheibe, die zum Reflektieren eines aus dem Waveguide (3) ausgekoppelten Lichtstrahlenbündels zu einer für Augen eines Benutzers (8) vorbestimmten zweidimensionalen Eyebox (12) so angeordnet ist, dass im Blickfeld des Benutzers (8) hinter der Reflexionsscheibe ein virtuelles Anzeigebild entsteht;
- eine Eye-Tracking-Einrichtung (15), die zur Ermittlung eines von den Augen des Benutzers (8) aktuell besetzten Eyebox-Fensters (EF) einer vorbestimmten Größe innerhalb der Eyebox (12) ausgebildet ist, sodass das Eyebox-Fenster (EF) nur einen Bruchteil einer Gesamthöhe der Eyebox (12) abdeckt;
- wobei das Faltgitter (5) in Strahlausbreitungsrichtung (S), die einer Eyebox-Höhenrichtung (H) entspricht, in mehrere unabhängig voneinander in einen lichtumlenkenden Zustand schaltbare Segmente (14) unterteilt ist; und
- die Vorrichtung eingerichtet ist, jeweils abhängig von dem ermittelten Eyebox-Fenster (EF) nur einige dieser Segmente (14) und mit einer derart voneinander verschiedenen Beugungseffizienz einzuschalten, dass das ausgekoppelte Lichtstrahlenbündel in Eyebox-Höhenrichtung (H) auf das ermittelte Eyebox-Fenster (EF) beschränkt ist und dieses im Wesentlichen gleichmäßig ausleuchtet.

2. Projektionsanzeigevorrichtung (1) nach Anspruch 1, bei der
- der Waveguide (3), insbesondere das Einkoppelgitter (4) und/oder das Faltgitter (5) und/oder das Auskoppelgitter (6), holografische Strukturen aufweist/aufweisen; und
- die bildgebende Einheit (2) eine Laserquelle als Lichtquelle aufweist.

3. Projektionsanzeigevorrichtung (1) nach Anspruch 1 oder 2, bei der
- die schaltbaren Segmente (14) des Faltgitters (5) als schaltbare Bragg-Gitter ausgebildet sind.

4. Projektionsanzeigevorrichtung (1) nach einem der vorhergehenden Ansprüche, bei der
- die Beugungseffizienz jedes einzelnen Segments (14) des Faltgitters (5) jeweils für das gesamte Segment (14) einheitlich einstellbar und unabhängig von den anderen Segmenten (14) zeitlich variierbar ist.

5. Projektionsanzeigevorrichtung (1) nach einem der vorhergehenden Ansprüche, bei der
- jedes schaltbare Segment (14) des Faltgitters (5) in Strahlausbreitungsrichtung (S), die der Eyebox-Höhenrichtung (H) entspricht, eine Breite von einigen wenigen Millimetern bis etwa 20 mm besitzt.

6. Projektionsanzeigevorrichtung (1) nach einem der vorhergehenden Ansprüche, die
- dazu ausgebildet und eingerichtet ist, die genannte voneinander verschiedene Beugungseffizienz einzelner eingeschalteter Segmente (14) des Faltgitters (5) durch Pulsweitenmodulation zu erzeugen.

7. Verfahren zum Betreiben einer Projektionsanzeigevorrichtung (1) nach einem der vorhergehenden Ansprüche, umfassend die Schritte:
- Erzeugen eines Lichtstrahlenbündels (L) durch die bildgebende Einheit (2) und Einkoppeln dieses Lichtstrahlenbündels (L) in den Waveguide (3);
- Erhalten eines Eye-Tracking-Signals von der Eye-Tracking-Einrichtung (15) und Ermitteln daraus eines von den Augen des Benutzers (8) aktuell besetzten Eyebox-Fensters (EF) innerhalb der Eyebox (12);
- Ermitteln derjenigen Segmente (14) des Faltgitters (5), die zum Ausleuchten des ermittelten Eyebox-Fensters (EF) beitragen, und Ermitteln für diese Segmente (14) einer derart voneinander verschiedenen Beugungseffizienz zur Erzeugung eines räumlichen Gradienten in Strahlausbreitungsrichtung (S) des Faltgitters (5), die der Eyebox-Höhenrichtung (H) entspricht, dass das aus dem Waveguide (3) ausgekoppelte Lichtstrahlenbündel in Eyebox-Höhenrichtung (H) auf das ermittelte Eyebox-Fenster (EF) beschränkt ist und dieses im Wesentlichen gleichmäßig ausleuchtet; und
- Einschalten der so ermittelten Segmente (14) des Faltgitters (5) mit der für das jeweilige Segment (14) ermittelten Beugungseffizienz.

8. Verfahren nach Anspruch 7, wobei
- die jeweils ermittelte Beugungseffizienz jedes einzelnen eingeschalteten Segments (14) des Faltgitters (5) durch Pulsweitenmodulation erzeugt wird.

9. Steuerungseinheit (16), die zum Betreiben einer Projektionsanzeigevorrichtung (1) nach einem der Ansprüche 1 bis 6 mittels automatischem Ausführen eines Verfahrens nach Anspruch 7 oder 8 ausgebildet und eingerichtet ist.

10. Fahrzeug, insbesondere ein Kraftfahrzeug (11), umfassend:
- eine Frontscheibe (7) und eine darunter angeordnete Instrumententafel (9);
- eine Projektionsanzeigevorrichtung (1) nach einem der Ansprüche 1 bis 6, deren Reflexionsscheibe durch die Frontscheibe (7) oder eine fahrzeuginnenseitig davor angeordnete Combinerscheibe gebildet ist und deren Waveguide (3) sich mit seiner Flächenseite, in der das Auskoppelgitter (4) ausgebildet ist, in oder entlang einer Oberseite der Instrumententafel (9) erstreckt; sowie
- eine Steuerungseinheit (9) nach Anspruch 9.

## Claims

1. Waveguide-based projection display device (1), in particular for use in a vehicle, comprising:
• an imaging unit (2) and a planar, in particular flat, waveguide (3) which is configured for two-dimensional pupil expansion by having an outcoupling grating (6) formed over a large area in one of its surface sides, an incoupling grating (4) arranged laterally thereof for coupling in a light beam bundle generated by the imaging unit, and a folding grating (5) arranged therebetween for successively redirecting the coupled-in light to the outcoupling grating (6);
• an at least partially transparent reflection screen arranged to reflect a light beam bundle coupled out of the waveguide (3) to a two-dimensional eyebox (12) predetermined for the eyes of a user (8) such that a virtual display image is formed behind the reflection screen in the field of view of the user (8);
• an eye-tracking device (15) which is configured to determine an eyebox window (EF) of a predetermined size currently occupied by the eyes of the user (8) within the eyebox (12), such that the eyebox window (EF) covers only a fraction of a total height of the eyebox (12);
• wherein the folding grating (5) is subdivided in the beam propagation direction (S), which corresponds to an eyebox height direction (H), into a plurality of segments (14) which can be switched into a light-redirecting state independently of one another; and
• the device is configured to switch on, depending on the determined eyebox window (EF), only some of these segments (14) and with such mutually different diffraction efficiencies that the coupled-out light beam bundle is limited in the eyebox height direction (H) to the determined eyebox window (EF) and illuminates it substantially uniformly.

2. Projection display device (1) according to claim 1, wherein
• the waveguide (3), in particular the incoupling grating (4) and/or the folding grating (5) and/or the outcoupling grating (6), has/have holographic structures; and
• the imaging unit (2) has a laser source as a light source.

3. Projection display device (1) according to claim 1 or 2, wherein
• the switchable segments (14) of the folding grating (5) are configured as switchable Bragg gratings.

4. Projection display device (1) according to any one of the preceding claims, wherein
• the diffraction efficiency of each individual segment (14) of the folding grating (5) is uniformly adjustable for the entire segment (14) and can be varied over time independently of the other segments (14).

5. Projection display device (1) according to any one of the preceding claims, wherein
• each switchable segment (14) of the folding grating (5) has a width of a few millimeters to about 20 mm in the beam propagation direction (S) which corresponds to the eyebox height direction (H).

6. Projection display device (1) according to any one of the preceding claims, which
• is configured and arranged to generate said mutually different diffraction efficiency of individual switched-on segments (14) of the folding grating (5) by pulse width modulation.

7. Method for operating a projection display device (1) according to any one of the preceding claims, comprising the steps:
• generating a light beam bundle (L) by the imaging unit (2) and coupling this light beam bundle (L) into the waveguide (3);
• receiving an eye-tracking signal from the eye-tracking device (15) and determining therefrom an eyebox window (EF) currently occupied by the eyes of the user (8) within the eyebox (12);
• determining those segments (14) of the folding grating (5) which contribute to illuminating the determined eyebox window (EF), and determining for these segments (14) such mutually different diffraction efficiencies for generating a spatial gradient in the beam propagation direction (S) of the folding grating (5), which corresponds to the eyebox height direction (H), that the light beam bundle coupled out of the waveguide (3) is limited in the eyebox height direction (H) to the determined eyebox window (EF) and illuminates it substantially uniformly; and
• switching on the segments (14) of the folding grating (5) thus determined with the diffraction efficiency determined for the respective segment (14).

8. Method according to claim 7, wherein
• the respectively determined diffraction efficiency of each individual switched-on segment (14) of the folding grating (5) is generated by pulse width modulation.

9. Control unit (16) for operating a projection display device (1) according to any one of claims 1 to 6, which is configured and arranged by means of automatic execution of a method according to claim 7 or 8.

10. Vehicle, in particular a motor vehicle (11), comprising:
• a windscreen (7) and an instrument panel (9) arranged thereunder;
• a projection display device (1) according to any one of claims 1 to 6, the reflection screen of which is formed by the windscreen (7) or a combiner screen arranged in front thereof on the vehicle interior side, and the waveguide (3) of which extends with its surface side, in which the outcoupling grating (4) is formed, in or along an upper side of the instrument panel (9); and
• a control unit (9) according to claim 9.

## Revendications

1. Dispositif d'affichage à projection à base de guide d'ondes (1), notamment destiné à être utilisé dans un véhicule, comprenant :
• une unité de formation d'image (2) et un guide d'ondes (3) surfacique, notamment plan, qui est conçu pour une expansion bidimensionnelle de pupille en présentant un réseau de découplage (6) formé sur une grande surface dans l'un de ses côtés de surface, un réseau de couplage (4) disposé latéralement par rapport à celui-ci pour coupler un faisceau lumineux généré par l'unité de formation d'image, ainsi qu'un réseau de pliage (5) disposé entre les deux pour rediriger successivement la lumière couplée vers le réseau de découplage (6) ;
• un écran de réflexion au moins partiellement transparent qui est disposé pour réfléchir un faisceau lumineux découplé du guide d'ondes (3) vers une eyebox bidimensionnelle (12) prédéterminée pour les yeux d'un utilisateur (8) de sorte qu'une image d'affichage virtuelle soit formée derrière l'écran de réflexion dans le champ de vision de l'utilisateur (8) ;
• un dispositif de suivi oculaire (15) qui est conçu pour déterminer une fenêtre d'eyebox (EF) d'une taille prédéterminée actuellement occupée par les yeux de l'utilisateur (8) à l'intérieur de l'eyebox (12), de sorte que la fenêtre d'eyebox (EF) ne couvre qu'une fraction d'une hauteur totale de l'eyebox (12) ;
• dans lequel le réseau de pliage (5) est subdivisé dans la direction de propagation du faisceau (S), qui correspond à une direction de hauteur d'eyebox (H), en plusieurs segments (14) pouvant être commutés dans un état de redirection de lumière indépendamment les uns des autres ; et
• le dispositif est configuré pour activer, en fonction de la fenêtre d'eyebox (EF) déterminée, seulement certains de ces segments (14) et avec des efficacités de diffraction mutuellement différentes de sorte que le faisceau lumineux découplé soit limité dans la direction de hauteur d'eyebox (H) à la fenêtre d'eyebox (EF) déterminée et l'éclaire de manière sensiblement uniforme.

2. Dispositif d'affichage à projection (1) selon la revendication 1, dans lequel
• le guide d'ondes (3), notamment le réseau de couplage (4) et/ou le réseau de pliage (5) et/ou le réseau de découplage (6), présente/présentent des structures holographiques ; et
• l'unité de formation d'image (2) présente une source laser comme source lumineuse.

3. Dispositif d'affichage à projection (1) selon la revendication 1 ou 2, dans lequel
• les segments commutables (14) du réseau de pliage (5) sont configurés comme des réseaux de Bragg commutables.

4. Dispositif d'affichage à projection (1) selon l'une quelconque des revendications précédentes, dans lequel
• l'efficacité de diffraction de chaque segment individuel (14) du réseau de pliage (5) est uniformément réglable pour l'ensemble du segment (14) et peut varier dans le temps indépendamment des autres segments (14).

5. Dispositif d'affichage à projection (1) selon l'une quelconque des revendications précédentes, dans lequel
• chaque segment commutable (14) du réseau de pliage (5) possède une largeur de quelques millimètres à environ 20 mm dans la direction de propagation du faisceau (S) qui correspond à la direction de hauteur d'eyebox (H).

6. Dispositif d'affichage à projection (1) selon l'une quelconque des revendications précédentes, qui
• est configuré et agencé pour générer ladite efficacité de diffraction mutuellement différente de segments individuels activés (14) du réseau de pliage (5) par modulation de largeur d'impulsion.

7. Procédé pour faire fonctionner un dispositif d'affichage à projection (1) selon l'une quelconque des revendications précédentes, comprenant les étapes :
• générer un faisceau lumineux (L) par l'unité de formation d'image (2) et coupler ce faisceau lumineux (L) dans le guide d'ondes (3) ;
• recevoir un signal de suivi oculaire du dispositif de suivi oculaire (15) et déterminer à partir de celui-ci une fenêtre d'eyebox (EF) actuellement occupée par les yeux de l'utilisateur (8) à l'intérieur de l'eyebox (12) ;
• déterminer les segments (14) du réseau de pliage (5) qui contribuent à éclairer la fenêtre d'eyebox (EF) déterminée, et déterminer pour ces segments (14) des efficacités de diffraction mutuellement différentes pour générer un gradient spatial dans la direction de propagation du faisceau (S) du réseau de pliage (5), qui correspond à la direction de hauteur d'eyebox (H), de sorte que le faisceau lumineux découplé du guide d'ondes (3) soit limité dans la direction de hauteur d'eyebox (H) à la fenêtre d'eyebox (EF) déterminée et l'éclaire de manière sensiblement uniforme ; et
• activer les segments (14) du réseau de pliage (5) ainsi déterminés avec l'efficacité de diffraction déterminée pour le segment respectif (14).

8. Procédé selon la revendication 7, dans lequel
• l'efficacité de diffraction respectivement déterminée de chaque segment individuel activé (14) du réseau de pliage (5) est générée par modulation de largeur d'impulsion.

9. Unité de commande (16) pour faire fonctionner un dispositif d'affichage à projection (1) selon l'une quelconque des revendications 1 à 6, qui est configurée et agencée au moyen de l'exécution automatique d'un procédé selon la revendication 7 ou 8.

10. Véhicule, notamment un véhicule automobile (11), comprenant :
• un pare-brise (7) et un tableau de bord (9) disposé en dessous ;
• un dispositif d'affichage à projection (1) selon l'une quelconque des revendications 1 à 6, dont l'écran de réflexion est formé par le pare-brise (7) ou une lame de combineur disposée devant celui-ci du côté intérieur du véhicule, et dont le guide d'ondes (3) s'étend avec son côté de surface, dans lequel le réseau de découplage (4) est formé, dans ou le long d'un côté supérieur du tableau de bord (9) ; ainsi que
• une unité de commande (9) selon la revendication 9.
